# FASCICULE DE BREVET EUROPEEN

(11) **EP 2 661 650 B1**
(45) Date de publication et mention de la délivrance du brevet: **19.08.2020**
(21) Numéro de dépôt: 12704514.4
(22) Date de dépôt: 02.01.2012
(51) Int. Cl.: G01N 15/12, G01N 15/14, G01N 15/10, G02B 27/09

(54) **DISPOSITIF D'INSPECTION D'UN FLUIDE BIOLOGIQUE**
VORRICHTUNG ZUR UNTERSUCHUNG EINER BIOLOGISCHEN FLÜSSIGKEIT
DEVICE FOR INSPECTING A BIOLOGICAL FLUID

(30) Priorité: 07.01.2011 FR 1100050
(43) Date de publication de la demande: 13.11.2013
(73) Titulaire: Horiba ABX SAS / Horiba Ltd, 34184 Montpellier cedex 4 (FR); Université de Limoges, 87000 Limoges (FR); Centre National de la Recherche Scientifique (C.N.R.S.), 75794 Paris Cedex 16 (FR)
(72) Inventeur: RONGEAT, Nelly, F-34000 Montpellier (FR); NERIN, Philippe, F-34080 Montpellier (FR); BRUNEL, Patrick, F-34920 Le Cres (FR)
(74) Mandataire: Palacci, Jeremie
(86) Numéro de dépôt international: PCT/FR2012/000001
(87) Numéro de publication internationale: WO 2012/093223

(56) Documents cités:
- DE-A1- 10 304 653
- FR-A1- 2 898 190
- US-A- 5 351 118
- US-A1- 2003 086 608
- US-A1- 2004 072 278
- US-B1- 7 016 523

## Description

L'invention concerne un dispositif d'inspection d'un fluide biologique, notamment pour la cytométrie de flux et l'hématologie.

Le domaine de l'analyse cytologique a connu un essor considérable avec le développement de l'optique moderne.

L'intégration de sources polychromatiques a permis de réaliser des analyseurs capables de détecter et d'analyser plusieurs types de cellules, et les progrès de la physique ont permis d'améliorer la qualité des mesures.

Cependant, ces progrès ont atteint leurs limites. En effet, il existe plusieurs manières de réaliser une source polychromatique pour l'intégrer dans un analyseur, mais elles ont toutes des défauts qui limitent les analyses modernes.

Une première manière consiste à utiliser des sources de type lampe QTH (Quartz Tungstène Halogène) ou de type source à décharge, par exemple lampe à mercure ou à xénon.

Les lampes QTH ont une brillance relativement faible. En effet, l'application des lois de la thermodynamique au fil de tungstène porté à la température T d'émissivité ε(T), fait que cette brillance est faible quelle que soit la longueur d'onde.

De plus, l'augmentation de puissance ne peut se faire qu'au détriment de la durée de vie, puisque seule une augmentation significative de la température du filament engendre une augmentation du flux photonique. Or une augmentation importante de la température du filament de tungstène au-delà de 3000 °C engendre des mécanismes de vieillissement non réversibles qui limitent la durée de vie à moins de 1000 heures.

En outre, la densité de puissance au point de mesure ne peut être augmentée qu'en choisissant une optique de mise en forme ayant une grande ouverture numérique. En pratique, le cône d'illumination incident est ouvert à plus de 30 degrés. Ceci limite les possibilités de mesure de lumière diffractée aux petits angles, comme cela est pratiqué usuellement dans les systèmes de cytométrie en flux.

Si la brillance de la source à décharge peut être augmentée considérablement par rapport à une lampe QTH, on doit noter toutefois plusieurs inconvénients :
- il s'agit de sources étendues, de faible cohérence spatiale, qui sont donc inadaptées à la mesure de signaux de diffraction aux petits angles,
- ces sources sont pulsées à l'aide de très hautes tensions, et génèrent donc des perturbations électromagnétiques dans les composants électroniques de traitement des signaux bas niveaux,
- ces perturbations, qui sont des impulsions dont le spectre en fréquence est très étendu, sont donc très difficiles à filtrer, et interfèrent directement sur les signaux mesurés par le système de cytométrie en flux, puisqu'il est par principe basé sur la génération et le traitement d'impulsions,
- elles sont d'une extrême fragilité mécanique, et
- leur durée de vie n'excède pas quelques 100 heures d'utilisation dans un système de cytométrie en flux destiné à une utilisation intensive.

Pour résumer, ces types de sources ont des durées de vie limitées et présentent une densité spectrale de puissance trop limitée pour les applications en cytométrie et pour leur utilisation dans le domaine de la fluorescence. De plus, ces sources étendues de faible cohérence spatiale, sont inadaptées pour des mesures de diffraction aux petits angles.

Une autre approche a été d'utiliser des lasers, qui présentent des propriétés énergétiques plus intéressantes. Cependant, les lasers utilisés sont monochromatiques, ce qui impose l'utilisation conjointe de plusieurs lasers alignés pour réaliser des mesures successives ou simultanées.

Cette approche pose des problèmes conséquents de réalisation de l'analyseur en termes d'alignement, et induit des coûts de réalisation élevés.

Des problèmes similaires se posent également dans le cadre de sources de lumière présentant un spectre peu étendu. DE 103 04 653 A1, FR 2 898 190 A1, US 5 351 118 A et US 2003/086608 A1 divulguent des dispositifs d'inspection d'un fluide biologique connus.

L'invention vient améliorer la situation.

À cet effet, l'invention propose un dispositif d'inspection d'un fluide biologique comprenant un canal pour la circulation du fluide, un premier module d'inspection disposé au niveau d'une première région dudit canal, et un deuxième module d'inspection disposé au niveau d'une deuxième région dudit canal, ce dispositif étant agencé pour fournir une grandeur représentative de la sortie du deuxième module d'inspection.

Le premier module d'inspection est agencé pour mesurer au moins une caractéristique électrique du fluide traversant la première région. Le deuxième module d'inspection est agencé pour mesurer au moins une caractéristique optique du fluide traversant la deuxième région.

Le dispositif d'inspection comprend en outre un contrôleur relié au premier module d'inspection et au deuxième module d'inspection et agencé pour commander le deuxième module d'inspection en fonction de la sortie du premier module d'inspection. Le dispositif de l'invention est particulièrement avantageux car il permet de lier de manière commandée la mesure optique et la mesure électrique initiale. Ainsi, il devient possible d'utiliser plusieurs sources lumineuses, telles que par exemple des lasers monochromatiques, un laser blanc également appelé laser supercontinuum, ou encore une LED, ou une RCLED avec un coût de mise en œuvre diminué et une stabilité mécanique et optique améliorée.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente un diagramme schématique d'une partie d'un dispositif selon l'invention,
- la figure 2 représente un premier mode de réalisation du deuxième module d'inspection de la figure 1,
- la figure 3 représente une image de la fenêtre optique issue de l'unité d'illumination de la figure 2,
- la figure 4 représente un diagramme schématique du contrôleur de la figure 1,
- la figure 5 représente les divers signaux dans le dispositif de la figure 1 en fonction du temps,
- la figure 6 représente un exemple d'image obtenue avec le dispositif comprenant le module d'illumination de la figure 2,
- la figure 7 représente un deuxième mode de réalisation du deuxième module d'inspection de la figure 1,
- la figure 8 représente un spectre lumineux de la source d'illumination de la figure 7, et
- les figures 9 à 11 représentent des exemples d'images obtenues avec le dispositif comprenant le module d'illumination de la figure 7.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

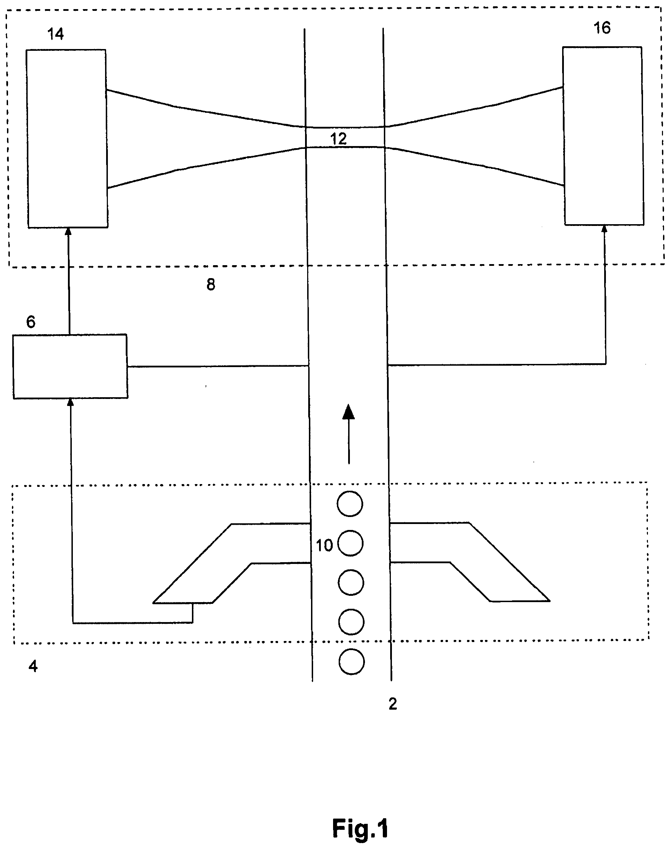

La figure 1 représente un dispositif d'inspection selon l'invention, qui comprend un canal fluidique 2, un premier module d'inspection 4, un contrôleur 6 et un deuxième module d'inspection 8.

Dans l'exemple décrit ici, le fluide analysé est du sang, qui circule dans le canal 2 dans le sens désigné par une flèche sur la figure 1. Bien que l'invention trouve une application particulièrement avantageuse dans le domaine du comptage hématologique, elle concerne de manière plus générale tout type de fluide et d'analyse biologiques. Elle pourra ainsi être utilisée pour réaliser de la cytométrie de flux ou autre.

Le canal 2 est une partie de la cuve de mesure du dispositif. Comme cela est déjà connu, par exemple dans le brevet FR 2 878 032, la cuve de mesure comprend une buse de focalisation et un capillaire disposé en regard de l'extrémité de celle-ci.

Cette réalisation permet d'obtenir un effet de gainage hydrodynamique, les cellules du sang débouchant une à une dans une zone ou région dite de mesure. La figure 1, avec le canal 2, est une vue rapprochée du dispositif au niveau de cette zone de mesure.

Bien que l'invention soit ici décrite en référence à des cellules, il doit être compris qu'elle est adaptée à l'inspection d'un fluide pour détecter de manière plus générale des particules dans celui-ci. Par particule, il doit être compris de manière non limitative des cellules, des vésicules, des parasites, ou encore des virus.

Dans l'exemple décrit ici, le canal 2 comprend une première région ou zone 10 et une deuxième zone ou région 12 qui sont séparées d'une distance axiale de 210 µm. Cette distance peut varier en fonction des dispositifs, et reste en général comprise entre quelques dizaines de micromètres et quelques centaines de micromètres. Comme ils sont au même niveau, on pourra parler indifféremment de distance entre les modules d'inspection ou de distance entre les régions.

Dans ce qui suit, les termes zone et région peuvent être utilisés et désignent le même élément, c'est-à-dire une portion délimitée du canal 2 qui voit passer les cellules du sang à analyser une à une.

Le premier module d'inspection 4 est disposé dans la première région 10, et permet de réaliser une mesure d'une caractéristique électrique ou magnétique du fluide qui traverse cette région.

Dans l'exemple décrit ici, cette mesure est réalisée au travers d'un micro-orifice situé dans le canal 2. Le premier module d'inspection 4 comprend une source de courant qui est reliée au micro-orifice, de sorte que le canal 2 est traversé par un courant électrique au niveau de celui-ci.

En l'absence de cellule, le fluide qui traverse la première région 10 définit une impédance de charge Z, qui est mesurée par deux électrodes placées de chaque côté du micro-orifice. Lorsqu'une cellule du sang traverse la première région 10, elle entraîne une augmentation d'impédance Z. Cette variation d'impédance permet de déterminer, d'une part, le volume de la cellule, d'autre part, d'effectuer un comptage cellulaire.

Le deuxième module d'inspection 8 est disposé dans la deuxième région 12, et permet de réaliser une mesure d'une caractéristique optique du fluide qui traverse cette région.

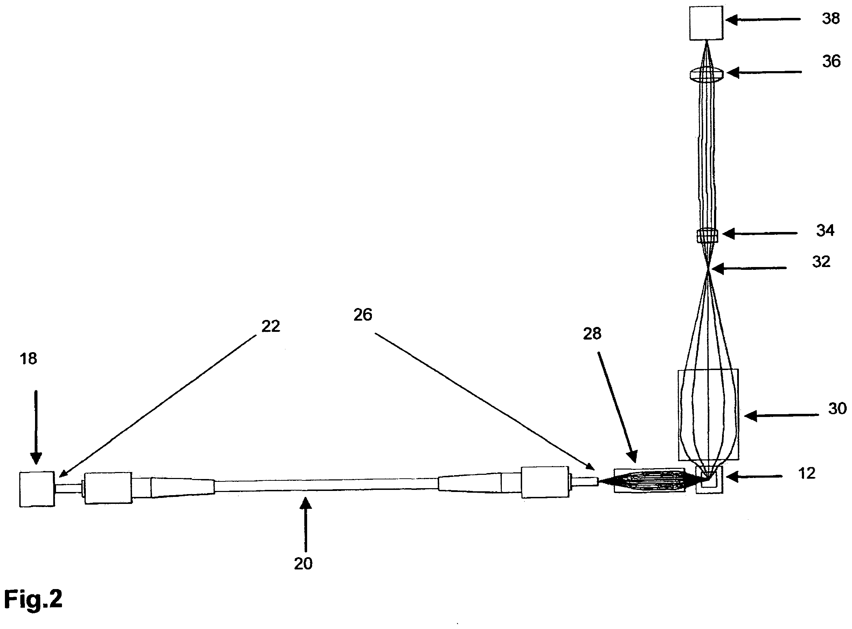

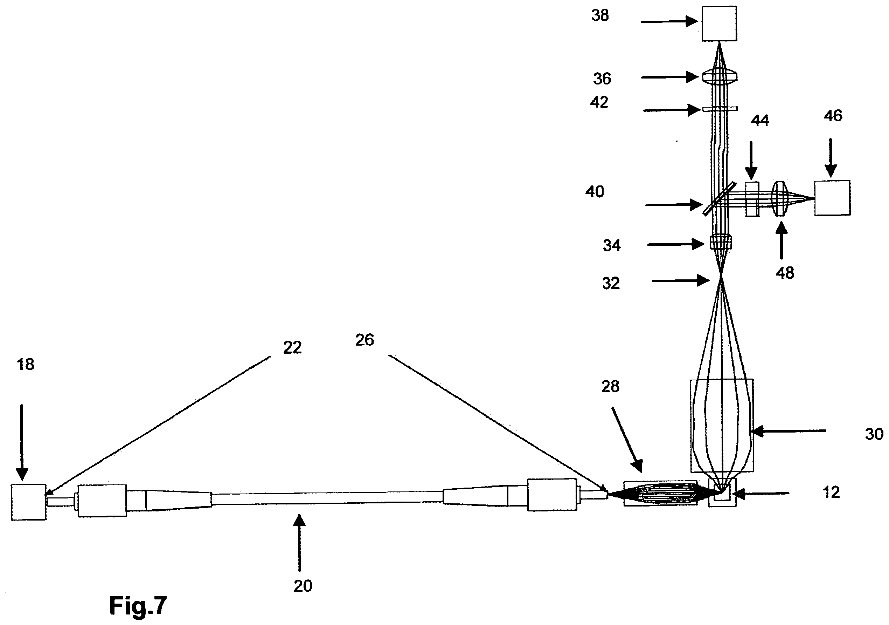

Le deuxième module 8 comprend d'une part une unité d'illumination 14, et d'autre part une unité d'analyse 16. Ces éléments seront décrits plus avant en référence aux figures 2 et 7.

La figure 2 représente un premier mode de réalisation du deuxième module d'inspection 8, observé dans l'axe du canal 2.

Dans ce mode de réalisation, l'unité d'illumination 14 comprend une source d'illumination 18 qui comprend une diode électroluminescente à cavité résonnante (RCLED) comme une ZL60003 de chez Zarlink, et un guide de lumière 20. La source d'illumination 18 est relié à une extrémité d'entrée 22 du guide de lumière 20.

Comme cela a été décrit dans le document FR 2 878 032, le guide de lumière 20 comprend une extrémité de sortie 26, en regard de laquelle est disposé un système de mise en forme 28.

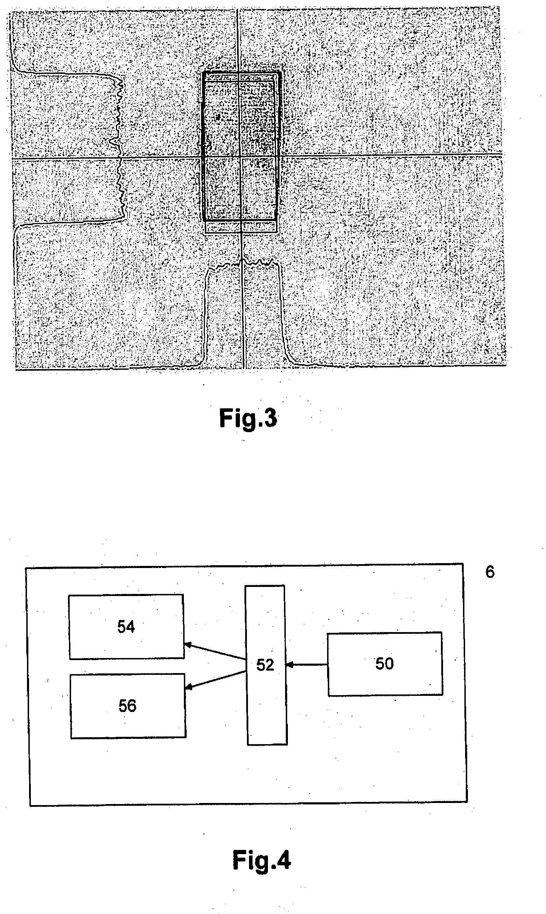

La partie d'extrémité de cette fibre optique forme l'extrémité 26, et a été traitée différemment, par micro-usinage, de manière à obtenir un profil de faisceau tel que celui représenté sur la figure 3 au niveau de la deuxième région 12. En variante, il serait possible d'utiliser une fibre optique micro-conformée, une fibre optique guidée classique, ou d'autres systèmes optiques comme un système catadioptrique, réfractif ou diffractive. Le système optique peut aussi être anamorphique.

De l'autre côté du canal 2, l'unité d'analyse 16 comprend un objectif 30, un diaphragme 32 et des lentilles de collimation 34 suivies d'une lentille de focalisation 36 sur l'analyseur optique 38.

L'analyseur optique 38 est en lui-même bien connu, et peut comprendre un détecteur qui peut être un photomultiplicateur ou une photodiode ou tout autre dispositif de détection photoélectrique.

L'unité d'analyse 16 peut être ajustée pour que le signal lumineux collecté corresponde à un ou des effets attendus d'interaction de la lumière avec le fluide examiné : diffraction aux petits angles, et/ou diffraction aux grands angles et/ou absorption et/ou fluorescence et/ou durée de vie de fluorescence.

Dans l'exemple décrit ici, la source d'illumination 18 formée par cette RCLED présente un temps de réponse très rapide, de l'ordre de 3 ns. Le spectre lumineux observé à la sortie de ce composant optique s'étend de 640 à 660 nm.

La source d'illumination 18 formée par cette RCLED présente également l'avantage de pouvoir être déclenchée, c'est-à-dire qu'elle émet son rayonnement lumineux sur commande.

Cette commande est réalisée par le contrôleur 6. Comme représenté sur la figure 4, le contrôleur 6 comprend un calculateur 50, un limiteur 52, et deux générateurs de signaux 54 et 56.

Comme cela apparaît sur la figure 1, le contrôleur 6 est relié d'une part au premier module d'inspection 4, et d'autre part au deuxième module d'inspection 8. En effet, le rôle du contrôleur 6 est de commander l'activation du deuxième module d'inspection 8 lorsqu'une cellule a été détectée par le premier module d'inspection 4.

Pour cela, le contrôleur 6 reçoit le signal de détection du premier module d'inspection 4, et émet un signal de commande d'activation du deuxième module d'inspection 8 avec un retard qui permet de tenir compte d'un groupe de variables, qui peut être le quadruplet suivant :
- la distance entre la zone de mesure du premier module d'inspection 4 et la zone de mesure du deuxième module d'inspection 8
- la vitesse du fluide dans le canal 2,
- le temps de déclenchement de la source d'illumination 18, ce temps peut être égal à zéro, et
- la variation d'apparition des cellules.

Ainsi, dans le module d'inspection 8, la source d'illumination 18 est déclenchée juste au moment où une cellule détectée préalablement par le premier module d'inspection 4 passe dans la deuxième région 12. De la même manière, l'analyseur optique 38 est commandé pour effectuer la mesure juste au moment où la source d'illumination 18 a été déclenchée.

La source d'illumination 18 est donc allumée juste à temps, tout comme l'analyseur optique 38, ce qui limite au maximum l'influence d'une quelconque lumière parasite.

Les données relatives aux calculs du retard approprié peuvent être stockées dans une mémoire puis traitées par le calculateur 50 pour finalement être utilisées pour le déclenchement de la source d'illumination 18 ou du module de détection 38. Les données relatives aux calculs du retard approprié peuvent être également traitées par le calculateur 50 et utilisées pour le déclenchement de la source d'illumination 18 ou du module de détection 38 en temps réel.

Le contrôleur 6 peut être réalisé de plusieurs manières, notamment sous la forme d'un circuit électronique comportant différents types de composants électroniques, ou des systèmes électroniques de type FPGA (Field Programmable Gâte Array) ou CPLD (Complex Programmable Logical Device).

Le calculateur 50 peut être réalisé sous la forme d'une "Look-Up Table", qui va chercher la valeur pour le retard en fonction du quadruplet de variables décrit plus haut comme exemple, ou mettre en œuvre une fonction mathématique, qui calcule directement le retard en fonction de ce quadruplet de variables.

En sortie, le calculateur 50 commande les générateurs de signal 54 et 56, dont l'un est relié à l'unité d'illumination 14, et l'autre à l'unité d'analyse 16.

Le générateur de signal 54 génère un signal dont la forme dépend de la source d'illumination 18. Dans l'exemple décrit ici, la RCLED de la source d'illumination 18 est excitée par un signal de courant en forme de créneau, mais la forme, la durée et l'intensité de cette impulsion pourraient varier en fonction de la source lumineuse.

Le générateur de signal 56 génère une fenêtre de mesure qui dépend de la largeur temporelle du signal optique émis par la source d'illumination 18, c'est-à-dire sa durée, ainsi que des variations de cette source ou de la largeur du signal 54. Ainsi, si le temps de déclenchement de la source d'illumination 18 peut varier d'une quantité donnée autour de sa valeur nominale, le générateur de signal 56 génère une fenêtre de mesure plus large qui en tient compte. À titre d'exemple, si la largeur temporelle du signal optique est de 5 µs, et que le temps de déclenchement de la source d'illumination 18 varie de 3 µs par rapport au temps de déclenchement moyen, la fenêtre de mesure générée sera de 8 µs.

Le limiteur 52 est une sorte de barrière de commande disposée entre le calculateur 50 et le générateur de signal 54.

Dans les analyseurs actuels d'hématologie, la fréquence de récurrence d'illumination maximale calculée pour mesurer la plupart des cellules leucocytaires est de l'ordre de 10kHz. Par conséquent, il n'est ni utile ni nécessaire que le générateur 54 excite la source d'illumination 18 avec une fréquence supérieure à cette fréquence maximale. Or il est possible que le module d'inspection 4 détecte des cellules avec une fréquence supérieure à 10 kHz, et que le contrôleur 6 soit amené en conséquence à exciter la source d'illumination 18 avec une fréquence trop élevée. Le limiteur 52 permet d'éviter de telles situations.

Le limiteur 52 permet également d'éviter de générer des signaux d'excitation pour des sources d'illumination limitées en fréquence. Cela est par exemple le cas pour la source d'illumination de la figure 7, qui sera décrite plus bas.

Dans l'exemple décrit ici, le limiteur 52 est également connecté au générateur de signal 56, car il est inutile de générer une fenêtre de mesure dans l'unité d'analyse si l'unité d'illumination 18 n'est pas activée ce qui engendrerait du bruit photonique.

D'une manière générale, la largeur de l'impulsion du générateur 54 est plus faible que la largeur de la fenêtre de mesure. Cependant, cette largeur d'impulsion peut également dépendre uniquement des caractéristiques intrinsèques de la source et de la vitesse de passage des cellules biologiques.

En variante, le limiteur 52 peut être intégré individuellement au générateur de signal 54 et/ou au générateur de signal 56 et/ou au calculateur 50. Toujours en variante, le calculateur 50 peut tenir compte de la fréquence de détection des cellules dans le calcul du retard. En effet, le temps de déclenchement de la source d'illumination 18 peut varier en fonction de la fréquence des impulsions de déclenchement qu'elle reçoit. Toujours en variante, le contrôleur 6 pourrait être muni d'une mémoire pour stocker tout paramètre utile.

Dans d'autres modes de réalisation, le contrôleur 6 peut également envoyer des paramètres d'analyse à l'unité d'illumination 14 et/ou à l'unité d'analyse 16, afin de réaliser des ajustements spécifiques en fonction des mesures effectuées par le premier module d'inspection 4.

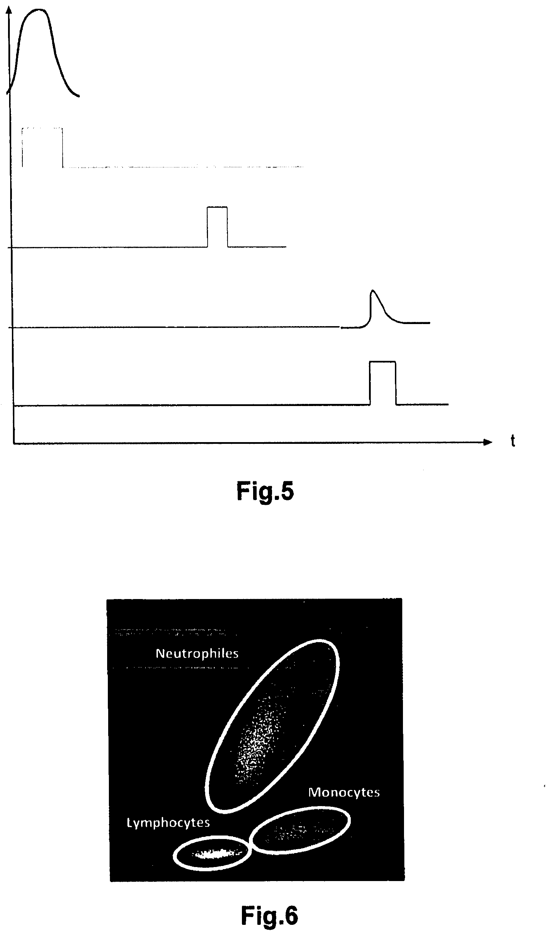

La figure 5 représente un exemple en montrant les divers signaux circulant dans le dispositif en fonction du temps pour permettre de mieux comprendre le traitement effectué par le contrôleur 6 :
- la première courbe représente le signal en sortie du premier module d'inspection 4,
- la deuxième courbe représente la mise en forme du signal de la première courbe par le contrôleur 6,
- la troisième courbe représente le signal en sortie du contrôleur 6, décalée dans le temps d'une durée égale à t(retard) définie plus bas,
- la quatrième courbe représente le signal (lumineux) en sortie de la source d'illumination 18, déclenchée avec un retard dont la durée dépend de la source d'illumination elle-même et qui est t(déclenchement source), ce temps pouvant être nul en fonction de la source d'illumination et
- la cinquième courbe représente le signal de commande envoyé par le contrôleur 6 à l'unité d'analyse 16, appelée plus haut fenêtre de mesure.

Ainsi, il apparaît clairement que le retard qui est appliqué par le contrôleur 6 est comme suit : t(retard) = t(distance entre modules)-t(déclenchement source). Et l'unité d'analyse 16 est commandée pour mesurer sur une fenêtre de temps comprenant la durée de l'impulsion de la source lumineuse 18, appelée plus haut fenêtre de mesure.

En variante, le retard pourrait également être calculé pour tenir compte du temps de calcul et de génération du signal de commande par le contrôleur 6. Le réglage de ce paramètre pourrait être manuel ou automatique.

L'utilisation du contrôleur 6 comme commande à retard variable est très importante et avantageuse. En effet, il est possible d'utiliser un contrôleur 6 à retard non variable, et de déplacer les positions relatives du premier module d'inspection 4 et du deuxième module d'inspection 8. Cependant ce type de montage nécessite des réglages complexes et longs à mettre en œuvre.

De plus, il est également avantageux que la distance entre le premier module d'inspection 4 et le deuxième module d'inspection 8 ne soit ni trop importante, ni trop faible, afin d'éviter les réflexions lumineuses sur les parties mécaniques de la première région et pour rester dans des conditions optimales d'hydrofocalisation.

Ces contraintes rendent très complexe, et coûteuse l'industrialisation des solutions à retard fixe, ce qui n'est pas satisfaisant.

L'utilisation du contrôleur 6 permet de résoudre ces problèmes, comme il est très avantageux d'ajuster le calcul du retard, plutôt que de déplacer et de réaligner les modules d'inspection. En outre, la commande de l'unité d'illumination 14 et de l'unité d'analyse 16 par le contrôleur 6 permet de limiter la lumière parasite en ne déclenchant l'impulsion lumineuse qu'au moment du passage d'une cellule et en ajustant la fenêtre de mesure sur cette impulsion.

La figure 6 montre un exemple d'une matrice obtenue au moyen du dispositif de la figure 1 mettant en œuvre le deuxième module d'inspection de la figure 2.

Ici, le dispositif d'inspection constitue un analyseur de diagnostic cellulaire comprenant deux mesures séquentielles dans le flux de particules. La première mesure correspond à la détection électrique des particules et la seconde mesure correspond à l'interaction entre le faisceau lumineux de la RCLED non filtré et les particules.

Comme on l'a vu plus haut, la RCLED est une source d'illumination déclenchée qui est commandée par le contrôleur par injection d'un signal carré avec des valeurs de tensions adaptées. Comme vu plus haut, la RCLED présente un temps de réponse très rapide (3 ns) et à la sortie de ce composant optique, le spectre lumineux observé s'étend de 640 à 660 nm.

La figure 7 représente un deuxième mode de réalisation du module d'inspection 8, assez proche de celui de la figure 2. Il diffère en ce que l'unité d'illumination 14 (représentée en figure 1) est modifiée, et en ce que l'unité d'analyse 16 (représentée en figure 1) comprend en outre un filtre dichroïque 40, des filtres en longueur d'onde 42 et 44 (FITC-3540B Exciter et FF01 530/43 de la société Semrock), ainsi qu'un analyseur optique 46 supplémentaire avec sa lentille de focalisation 48.

En effet, dans ce mode de réalisation, l'unité d'illumination 14 comprend une source d'illumination 18 qui comprend un laser blanc, au lieu d'une RCLED. Le laser blanc 18 est relié à une extrémité d'entrée 22 du guide de lumière 20 par une fibre optique à cristaux photonique non représentée.

Comme cela a été décrit plus haut, le guide de lumière 20 comprend une extrémité de sortie 26, en regard de laquelle est disposé un système de mise en forme 28. La partie d'extrémité de cette fibre optique forme l'extrémité 26, et a été traitée différemment, par micro-usinage, de manière à obtenir un profil de faisceau tel que celui représenté sur la figure 3 au niveau de la deuxième région 12. En variante, il serait possible d'utiliser une fibre optique micro-conformée, une fibre optique guidée classique, ou d'autres systèmes optiques comme un système de lentilles.

L'utilisation d'un laser blanc comme source d'illumination 18 ouvre de nombreuses possibilités. Dans l'exemple décrit ici, le laser blanc 18 est obtenu par couplage d'un laser de pompe présentant une fréquence de répétition maximale de 2 kHz, une largeur d'impulsion lumineuse de 450 ps, et une énergie maximum d'impulsion de 8 µJ, avec une fibre optique à cristaux photonique hautement non linéaire.

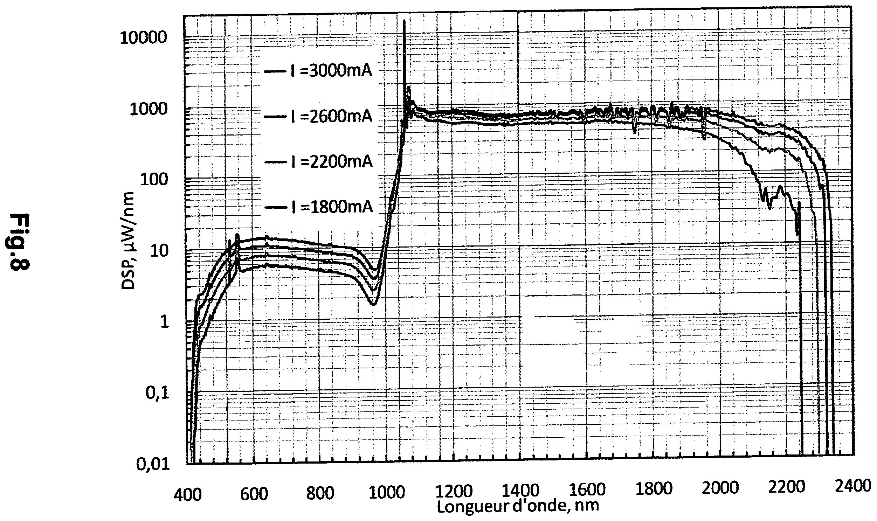

À la sortie de cette fibre, le spectre lumineux observé s'étend de 380 nm à 1750 nm, et forme un supercontinuum d'énergie. Un exemple de ce spectre supercontinuum est représenté sur la figure 8. Ce laser blanc a une puissance moyenne sur tout le spectre de 6 mW, pour une fréquence maximale de 2 kHz.

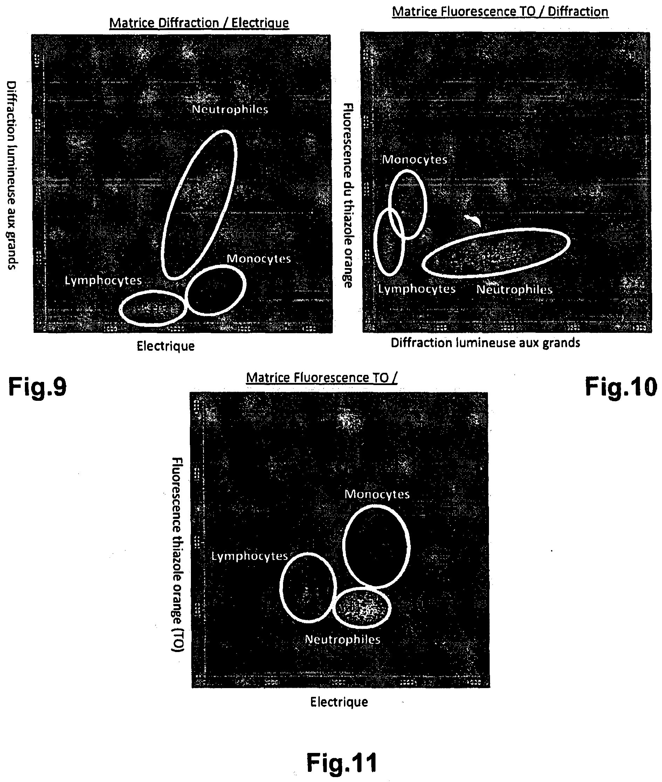

L'utilisation d'un filtre passe bande centré à la longueur d'onde de 488 nm (FITC-3540B Exciter de la société Semrock) de largeur de bande de 36 nm permet d'exciter le Thiazole Orange. Ainsi, la puissance moyenne du faisceau lumineux dans cette bande de longueurs d'onde est de 290 µW, soit une puissance crête de 320 W. L'énergie lumineuse est ici estimée à 145 nJ, cela permet de mesurer des signaux de fluorescence et de diffraction avec des rapports signaux à bruit satisfaisants comme indiqué à la figure 10.

Le fait d'utiliser un laser blanc permet d'avoir un spectre large en longueur d'onde et de pouvoir filtrer les longueurs d'onde souhaitées en fonction des fluorochromes que l'on souhaite détecter. En effet, les fluorochromes ne peuvent être excités qu'à certaines longueurs d'onde. La latitude de choix de fluorochromes qui pourront être excités selon le résultat attendu est donc plus vaste grâce à cette source à large spectre. La source d'illumination 18 formée par ce laser blanc présente également l'avantage d'être déclenchée, c'est-à-dire qu'elle émet son rayonnement lumineux sur commande.

Le laser blanc de la source d'illumination 18 est un laser déclenché qui peut être commandé par le contrôleur 6 par injection d'un signal carré avec des valeurs de tensions adaptées. Comme vu plus haut, le laser de pompe est un laser qui émet dans l'infrarouge, avec une longueur d'onde d'émission de 1064 nm, et dont la fréquence maximale est de 2 kHz. Le laser blanc est obtenu par couplage de cette pompe avec une fibre à cristal photonique.

Le limiteur 52 trouve une application particulièrement avantageuse dans ce mode de réalisation. En effet, on vient de voir que la source d'illumination 18 de ce mode de réalisation a une fréquence maximale de 2 kHz. Par conséquent, il ne faut pas que le générateur de signal 54 excite cette source avec une fréquence supérieure à 2 kHz.

Or il est possible que le module d'inspection 4 détecte des cellules avec une fréquence supérieure à 2 kHz, et que le contrôleur 6 soit amené en conséquence à exciter la source d'illumination 18 avec une fréquence trop élevée. Le limiteur 52 permet d'éviter de telles situations. Dans l'exemple décrit ici, le limiteur 52 écarte une détection de cellule trop rapprochée de la précédente, pour que la cadence des excitations successives de la source d'illumination reste au plus égale à 2 kHz.

Les figures 9 à 11 montrent des exemples de résultats obtenus avec le module d'inspection 8 du dispositif décrit avec la figure 7. Dans ces exemples, l'échantillon sanguin a été préalablement incubé avec un réactif contenant du Thiazole Orange qui a la particularité de fluorescer lorsqu'il est lié à des molécules d'acides nucléiques contenues dans les cellules nucléées. Cette fluorescence est détectable si on excite le Thiazole Orange dans le bleu et qu'on mesure la fluorescence émise dans le vert.

Ici, comme le faisceau lumineux de l'unité d'illumination est filtré dans le bleu, les signaux détectés comportent une première composante de diffraction aux grands angles dans le bleu et une seconde composante de fluorescence provenant du Thiazole Orange (excitation dans le bleu et émission dans le vert).

Les mesures obtenues sont représentées sous forme de représentations bi-paramétriques sur les figures 9 à 11. Ces données permettent de caractériser les différentes populations leucocytaires, de les compter et de mettre en évidence la présence d'acides nucléiques contenus dans les cellules.

Bien que la puissance moyenne de cette source lumineuse soit faible, les résultats obtenus sont très concluants, l'image des figures 9 à 11 indiquant une bonne séparation des différentes populations leucocytaires. Ceci est dû à une puissance crête suffisante dans le visible, à une augmentation du rapport signal sur bruit, et à une optimisation du système optique.

Le mode de réalisation qui vient d'être décrit est donc caractérisé par l'utilisation d'un laser blanc comme source d'illumination, d'un guide de lumière dans l'unité d'illumination, et de la commande à la fois de l'unité d'illumination et de l'unité d'analyse par le contrôleur.

Il faut noter que ces éléments ne sont pas tous indispensables. Ainsi, il serait possible de commander uniquement l'unité d'illumination. En outre, comme cela a été mentionné plus haut, le guide de lumière peut être omis ou remplacé par d'autres éléments.

Par ailleurs, le laser blanc décrit ici est une source déclenchée. Cependant, d'autres sources de supercontinuum pourraient être utilisées, à base de lasers continus, d'autres lasers déclenchés (de manière passive et/ou active), ou de lasers à modes synchronisés avec et sans découpeur temporel.

L'invention s'applique particulièrement aux sources fonctionnant en régime impulsionnel car elles utilisent des puissances moyennes modérées (inférieures à 10 W) avec des fortes puissances crêtes (supérieures à 1kW).

Les lasers à mode bloqué sont caractérisés par une fréquence de répétition importante, supérieure à 1 MHz, qui correspond à la fréquence d'aller et retour de la lumière dans la cavité.

L'énergie véhiculée par ces impulsions est généralement faible du fait de la durée des impulsions qui est de l'ordre de la picoseconde et de la femtoseconde. Ce type de laser peut être utilisé de manière directe en illuminant, avec une grande fréquence de récurrence, les cellules passant devant une fenêtre d'analyse.

Dans ces conditions, plusieurs impulsions illuminent une cellule et aucune synchronisation entre le signal optique et l'élément biologique n'est nécessaire. Néanmoins, on pourrait envisager dans le cadre de cette invention l'utilisation d'un modulateur électro-optique (comme une cellule de Pockels ou un modulateur acousto-optique) permettant de prélever, sur commande, une impulsion unique qui peut être synchrone avec une cellule en mouvement.

La gigue temporelle est de l'ordre de quelques nanosecondes, généralement entre 1 et 5 ns, et correspond à l'incertitude d'arrivée de l'impulsion sur la cellule biologique.

Ce type de système est équivalent à un laser déclenché mais avec des caractéristiques différentes : durée d'impulsion de l'ordre de la picoseconde, énergie inférieure à 1 µJ, fréquence de récurrence liée au modulateur variant de l'ordre de 1 kHz à quelques centaines de kHz. Cette approche est, à l'heure actuelle, faiblement compétitive car le prix d'un tel laser est très élevé par rapport à un laser à solide déclenché (type microlaser YAG :Nd pompé par diode). Ces derniers permettent d'engendrer des impulsions de quelques nanosecondes ou picosecondes de manière très simple. Le principe repose sur la modification rapide du coefficient de surtension Q de la cavité laser (Q-Switch en anglais), en jouant sur les pertes ou le gain présent dans la cavité laser. Il existe deux types de déclenchement, le déclenchement actif et le déclenchement passif.

Le déclenchement actif repose sur l'introduction d'un composant optoélectronique dans la cavité ou sur une modulation de l'émission de la source de pompe à l'origine de l'inversion de population.

Dans le premier cas, l'utilisation d'un composant optoélectronique permet d'obtenir une émission avec une gigue temporelle faible, inférieure à 100 ns. Cependant, cela s'accompagne d'une augmentation de la longueur de la cavité laser à cause de l'insertion du modulateur. Il en résulte l'apparition de plusieurs modes longitudinaux qui peuvent introduire une instabilité d'amplitude par battement. L'utilisation d'un filtre sélectif dans la cavité permet de résoudre ce problème, moyennant une augmentation du coût du système laser.

Dans le second cas, la modulation rapide du pompage du laser permet également d'obtenir des impulsions de courte durée. Néanmoins, le temps de fluorescence du milieu amplificateur introduit un retard temporel et une dispersion dans le temps de l'énergie à l'origine du déclenchement de la cavité.

Il en résulte une gigue temporelle supérieure à 1 µs. Des gigues beaucoup plus faibles ont néanmoins été obtenues des dans le cas où la source laser possède une cavité microscopique, par exemple des diodes lasers ou des microlasers. Cependant, ces sources sans gigue nécessitent une amplification pour permettre une extension spectrale par effet non linéaire. La complexité et le coût d'un tel système sont généralement élevés.

Le déclenchement laser par effet passif est basé sur l'introduction d'un composant optique de type absorbant saturable dans la cavité laser. Aucune source de puissance externe n'est nécessaire pour déclencher cette « porte temporelle » : la seule émission spontanée amplifiée du laser permet une saturation de son absorption et donc une modification rapide du coefficient de qualité de la cavité.

Le faible encombrement résultant permet de réaliser des résonateurs très courts, ce qui permet d'obtenir des impulsions entre quelques dizaines de picosecondes et quelques nanosecondes.

Ce genre de source possède généralement une gigue supérieure à 1µs, et leur synchronisation par une commande externe est difficile. Le coût de ces sources est faible, et les impulsions obtenues sont généralement plus brèves que celles obtenues par déclenchement actif.

Les déclenchements à la fois actif et passif permettent de cumuler les avantages des deux méthodes. Le déclenchement actif permet une synchronisation de l'impulsion de sortie avec un autre système ou un élément biologique, tandis que le déclencheur passif permet d'obtenir des impulsions courtes. Les gigues temporelles sont de l'ordre de quelques microsecondes pour des fréquences de récurrences comprises entre 1 et 10 kHz.

Il existe aussi des systèmes à double déclenchement actif et passif c'est-à-dire deux déclenchements actifs et un déclenchement passif ou deux déclenchements passifs et un actif. Ces lasers utilisent le cumul de chaque effet pour améliorer les performances des sources en termes de gigue temporelle et de durée d'impulsion.

Dans le cadre de l'invention, toute source laser utilisant au moins un système de déclenchement actif extra- ou intra-cavité est utilisable pour les applications visées, à condition que la gigue temporelle soit inférieure à 3 µs environ.

Pour utiliser des supercontinuums en cytométrie en flux, il faut que ces lasers aient des caractéristiques spécifiques. Tout d'abord, le délai de création de l'impulsion (PCD ou pulse creation delay en anglais) doit être constant. Ce délai correspond au décalage temporel entre le signal de déclenchement envoyé au laser supercontinuum et la création de l'impulsion lumineuse qui s'ensuit.

Ensuite, la gigue est la variation temporelle maximale entre deux instants d'apparition de l'impulsion lumineuse. Pour que les mesures soient fiables en cytométrie en flux avec un supercontinuum, il faut préférentiellement que la variation du PCD et de la gigue soient inférieure à plus ou moins 1 µs. Enfin, la variation d'énergie entre les impulsions lumineuses sur la plage de fréquence doit être inférieure à 5 %.

Un élément important est que ces sources peuvent toutes être commandées par le contrôleur, soit impulsion par impulsion lorsqu'elles sont déclenchées, soit par exemple, par utilisation d'un modulateur acousto-optique qui agit comme un interrupteur pouvant sélectionner une ou plusieurs impulsions. Cela peut être un MOEMS ou un élément électro-optique de type cellule de Pockels.

D'autres sources d'illumination peuvent également être utilisées, comme des diodes, des diodes laser, ou encore une pluralité de lasers monochromes reliés à un modulateur acousto-optique commandé par le contrôleur.

Par ailleurs, il serait possible d'ajouter d'autres modules d'inspection optique plus en aval dans la cuve, afin de réaliser d'autres mesures. Ces modules d'inspection pourraient également être commandés par le contrôleur 6, d'une manière similaire à ce qui est réalisé pour la commande du deuxième module d'inspection 8. Dans ce cas, il faudra prévoir d'autres générateurs de signal dans le contrôleur 6.

Un déclenchement en cascade de plusieurs sources pourra également être réalisé en gérant le ou les retards entre chaque source.

## Revendications

1. Dispositif d'inspection d'un fluide biologique, comprenant un canal (2) pour la circulation du fluide, un premier module d'inspection (4) disposé au niveau d'une première région (10) dudit canal (2), et un deuxième module d'inspection (8) disposé au niveau d'une deuxième région (12) dudit canal (2), agencé pour fournir une grandeur représentative de la sortie du deuxième module d'inspection (8),
**caractérisé en ce que** le premier module d'inspection (4) est agencé pour mesurer au moins une caractéristique électrique du fluide traversant la première région (10), le deuxième module d'inspection (8) est agencé pour mesurer au moins une caractéristique optique du fluide traversant la deuxième région (12), et le dispositif d'inspection comprend en outre un contrôleur (6) relié au premier module d'inspection (4) et au deuxième module d'inspection (8) et agencé pour commander le deuxième module d'inspection (8) en fonction de la sortie du premier module d'inspection (4), dans lequel le contrôleur (6) est propre à émettre un signal de commande présentant un retard choisi par rapport à un signal de sortie du premier module d'inspection (4), le contrôleur (6) étant agencé pour définir ledit retard choisi en fonction de la distance entre la première région (10) et la deuxième région (12), d'au moins une caractéristique temporelle du deuxième module d'inspection (8), et de la vitesse du fluide traversant le canal (2).

2. Dispositif selon la revendication 1, dans lequel le deuxième module d'inspection (8) comprend d'une part une unité d'illumination (14) agencée pour illuminer la deuxième région (12), et d'autre part une unité d'analyse (16) agencée pour collecter et mesurer au moins une caractéristique optique d'une lumière ayant traversé la deuxième région (12), et dans lequel le contrôleur (6) commande l'unité d'illumination (14).

3. Dispositif selon la revendication 2, dans lequel le contrôleur (6) commande en outre l'unité d'analyse (16).

4. Dispositif selon l'une des revendications 2 et 3, dans lequel l'unité d'illumination (14) comprend une source d'illumination (18) comprenant au moins un laser et/ou au moins une diode électroluminescente et/ou au moins une diode laser.

5. Dispositif selon la revendication 4, dans lequel la source d'illumination (18) comprend un laser blanc.

6. Dispositif selon la revendication 4, dans lequel la source d'illumination (18) comprend une pluralité de lasers présentant chacun une longueur d'onde d'émission respective.

7. Dispositif selon l'une des revendications 4 à 6, dans lequel l'unité d'illumination (18) comprend un guide de lumière (20) comprenant une première extrémité (22) pour la réception d'une lumière émise par la source d'illumination (18), et une deuxième extrémité (26) pour illuminer la deuxième région.

8. Dispositif selon l'une des revendications 4 à 7, dans lequel l'unité d'illumination (18) comprend un modulateur acousto-optique agencé pour recevoir la lumière émise par la source d'illumination (18) et pour la réémettre sélectivement sur commande du contrôleur (6).

9. Dispositif selon l'une des revendications précédentes, comprenant un ou plusieurs modules d'inspection auxiliaires disposés au niveau de régions respectives dudit canal, chacun agencé pour mesurer au moins une caractéristique optique du fluide traversant sa région respective, et dans lequel ledit contrôleur est agencé pour commander certains au moins des modules d'inspection auxiliaires.

## Patentansprüche

1. Vorrichtung zur Untersuchung einer biologischen Flüssigkeit, umfassend einen Kanal (2) für die Zirkulation der Flüssigkeit, ein erstes Untersuchungsmodul (4), das im Bereich einer ersten Region (10) des Kanals (2) angeordnet ist, und ein zweites Untersuchungsmodul (8), das im Bereich einer zweiten Region (12) des Kanals (2) angeordnet ist, ausgeführt, um eine repräsentative Größe des Ausgangs des zweiten Untersuchungsmoduls (8) bereitzustellen,
**dadurch gekennzeichnet, dass** das erste Untersuchungsmodul (4) ausgeführt ist, um mindestens eine elektrische Eigenschaft der Flüssigkeit, die die erste Region (10) durchquert, zu messen, das zweite Untersuchungsmodul (8) ausgeführt ist, um mindestens eine optische Eigenschaft der Flüssigkeit, die die zweite Region (12) durchquert, zu messen, und die Untersuchungsvorrichtung weiter einen Controller (6) umfasst, der an das erste Untersuchungsmodul (4) und an das zweite Untersuchungsmodul (8) angeschlossen ist, und ausgeführt ist, um das zweite Untersuchungsmodul (8) in Abhängigkeit von dem Ausgang des ersten Untersuchungsmoduls (4) zu steuern, wobei der Controller (6) dazu vorgesehen ist, ein Steuersignal auszugeben, das eine Verzögerung aufweist, die in Bezug auf ein Ausgangssignal des ersten Untersuchungsmoduls (4) ausgewählt ist, wobei der Controller (6) ausgeführt ist, um die ausgewählte Verzögerung in Abhängigkeit von dem Abstand zwischen der ersten Region (10) und der zweiten Region (12), mindestens einer zeitlichen Eigenschaft des zweiten untersuchungsmoduls (8) und der Geschwindigkeit der den Kanal (2) durchquerenden Flüssigkeit zu definieren.

2. Vorrichtung nach Anspruch 1, wobei das zweite Untersuchungsmodul (8) einerseits eine Beleuchtungseinheit (14) umfasst, die ausgeführt ist, um die zweite Region (12) zu beleuchten, und andererseits eine Analyseeinheit (16), die ausgeführt ist, um mindestens eine optische Eigenschaft eines Lichtes, das die zweite Region (12) durchquert hat, zu sammeln und zu messen, und wobei der Controller (6) die Beleuchtungseinheit (14) steuert.

3. Vorrichtung nach Anspruch 2, wobei der Controller (6) weiter die Analyseeinheit (16) steuert.

4. Vorrichtung nach einem der Ansprüche 2 und 3, wobei die Beleuchtungseinheit (14) eine Beleuchtungsquelle (18) umfasst, die mindestens einen Laser und/oder mindestens eine elektroluminiszierende Diode und/oder mindestens einen Diodenlaser umfasst.

5. Vorrichtung nach Anspruch 4, wobei die Beleuchtungsquelle (18) einen weißen Laser umfasst.

6. Vorrichtung nach Anspruch 4, wobei die Beleuchtungsquelle (18) eine Vielzahl von Lasern umfasst, die jeweils eine ensprechende Ausgabewellenlänge aufweisen.

7. Vorrichtung nach einem der Ansprüche 4 bis 6, wobei die Beleuchtungseinheit (18) einen Lichtleiter (20) umfasst, der ein erstes Ende (22) zur Aufnahme eines von der Beleuchtungsquelle (18) ausgegebenen Lichtes, und ein zweites Ende (26) zur Beleuchtung der zweiten Region umfasst.

8. Vorrichtung nach einem der Ansprüche 4 bis 7, wobei die Beleuchtungseinheit (18) einen akustischoptischen Modulator umfasst, der ausgeführt ist, um das von der Beleuchtungsquelle (18) ausgegebene Licht aufzunehmen und um es selektiv durch Steuerung des Controllers (6) erneut auszugeben.

9. Vorrichtung nach einem der vorstehenden Ansprüche, umfassend ein oder mehrere Hilfsuntersuchungsmodule, die im Bereich entsprechender Regionen des Kanals angeordnet sind, jeweils ausgeführt, um mindestens eine optische Eigenschaft der Flüssigkeit, die seine entsprechende Region durchquert, zu messen, und wobei der Controller ausgeführt ist, um mindestens bestimmte der Hilfsuntersuchungsmodule zu steuern.

## Claims

1. Device for inspecting a biological fluid, comprising a channel (2) through which the fluid flows, a first inspection module (4) arranged in a first region (10) of said channel (2), and a second inspection module (8) arranged in a second region (12) of said channel (2), which device is arranged to provide a quantity that is representative of the output of the second inspection module (8),
**characterised in that** the first inspection module (4) is arranged to measure at least one electrical property of the fluid passing through the first region (10), the second inspection module (8) is arranged to measure at least one optical property of the fluid passing through the second region (12), and the inspection device further comprises a controller (6), which is connected to the first inspection module (4) and to the second inspection module (8) and is arranged to control the second inspection module (8) according to the output of the first inspection module (4), wherein the controller (6) is capable of emitting a control signal having a delay chosen relative to an output signal of the first inspection module (4), the controller (6) being arranged to define said chosen delay as a function of the distance between the first region (10) and the second region (12), of at least one time property of the second inspection module (8), and of the speed of the fluid passing through the channel (2).

2. Device according to claim 1, wherein the second inspection module (8) comprises on the one hand an illumination unit (14) arranged to illuminate the second region (12), and on the other hand an analysis unit (16) arranged to collect and measure at least one optical property of a light that has passed through the second region (12), and wherein the controller (6) controls the illumination unit (14).

3. Device according to claim 2, wherein the controller (6) further controls the analysis unit (16).

4. Device according to any one of claims 2 and 3, wherein the illumination unit (14) comprises an illumination source (18) comprising at least one laser and/or at least one light-emitting diode and/or at least one laser diode.

5. Device according to claim 4, wherein the illumination source (18) comprises a white laser.

6. Device according to claim 4, wherein the illumination source (18) comprises a plurality of lasers each having a respective emission wavelength.

7. Device according to any one of claims 4 to 6, wherein the illumination unit (18) comprises a light guide (20) comprising a first end (22) for receiving a light emitted by the illumination source (18), and a second end (26) for illuminating the second region.

8. Device according to any one of claims 4 to 7, wherein the illumination unit (18) comprises an acousto-optic modulator arranged to receive the light emitted by the illumination source (18) and to re-emit it selectively under the control of the controller (6).

9. Device according to any one of the preceding claims, comprising one or more auxiliary inspection modules arranged in respective regions of said channel, each arranged to measure at least one optical property of the fluid passing through its respective region, and wherein said controller is arranged to control at least some of the auxiliary inspection modules.
